# EUROPEAN PATENT APPLICATION

(11) **EP 4 576 338 A1**
(43) Date of publication of application: **25.06.2025**
(21) Application number: 24218380.4
(22) Date of filing: 09.12.2024
(51) Int. Cl.: H01M 10/653, H01M 50/204, H01M 50/211, H01M 50/26, H01M 50/264

(54) **BATTERY PACK AND ELECTRIC VEHICLE**

(30) Priority: 22.12.2023 CN 202311785202; 01.04.2024 CN 202420657097 U
(71) Applicant: AESC Japan Ltd., Kanagawa, 2520012 (JP)
(72) Inventor: ZHANG, Xu, Pudong New Area Shanghai, 201315 (CN); FU, Fangkai, Pudong New Area Shanghai, 201315 (CN); FENG, Xiaowei, Pudong New Area Shanghai, 201315 (CN); HE, Yafei, Pudong New Area Shanghai, 201315 (CN)
(74) Representative: Becker, Eberhard

(57) **Abstract**

The disclosure relates to the technical field of batteries and specifically provides a battery pack and an electric vehicle. The battery pack includes a box body (1) having a lower casing bottom plate (13), a cell stack (2) formed by stacking a plurality of pouch cells (23), a thermally conductive structural adhesive (25) arranged between the cell stack (2)and the lower casing bottom plate (13), side plates (24) arranged at both ends of the cell stack (2) in a stacking direction and adhered to main body surfaces of the pouch cells (23) at both ends, and fixture fitting portions arranged on surfaces of the side plates (24) opposite to the pouch cells (23). In the solution, a pouch cell to pack (CTP) battery pack is constructed based on the pouch cells, the cell stack formed by stacking the pouch cells can be well protected, and assembly can be easily performed.

## Description

### BACKGROUND

### Technical Field

The disclosure relates to the technical field of power batteries, and in particular, to a battery pack and an electric vehicle integrated with the battery pack.

### Description of Related Art

The operating voltage of a single secondary battery cell is approximately 2.5V to 4.5V. In an electric vehicle or an energy storage system that requires large capacity and high voltage output, it is usually necessary to connect multiple cells in series and/or in parallel to form battery modules, connect the battery modules in series and/or in parallel to form a battery pack, and then further use the battery pack as an energy system to power the electric vehicle or as an energy storage system. The number and shape of the battery modules used to build the battery pack, as well as the number and shape of the cells used to form the battery modules, may be flexibly changed according to actual needs.

In the field of power batteries used in electric vehicles, in order to improve the full-charge endurance and charging speed of electric vehicles, it is necessary to further enhance the energy density and cooling performance of the battery pack. As a solution to improve energy density, in a cell to pack (CTP)-type battery pack, the steps of connecting cells in series and/or in parallel to form a battery module are omitted, and the cells are directly integrated into a battery pack. In this way, the structural components and electrical connectors required for forming the battery module are omitted, so that the space left for the cells themselves is increased.

At present, common cells are divided into categories such as cylindrical cells, square-casing cells, and pouch cells according to their different structures. CTP-type battery packs using square-casing cells have been widely promoted and used. As for the pouch cells, due to their inability to withstand external impacts and poor assembly performance, pouch cells still face a series of problems during integration into CTP-type battery packs.

### SUMMARY

The disclosure solves at least one of the multiple problems faced by pouch cells integrated into a pouch CTP battery pack in the related art.

The disclosure provides a battery including a box body, a cell stack, a thermally conductive structural adhesive, and a side plate.

The box body includes a lower casing bottom plate. The cell stack is formed by stacking a plurality of pouch cells and is arranged in the box body. The thermally conductive structural adhesive is arranged between the cell stack and the lower casing bottom plate and is bonded and fixed to the cell stack and the lower casing bottom plate. The side plates are arranged at both ends of the cell stack in a stacking direction and are adhered to main body surfaces of two of the pouch cells at both ends of the cell stack in the stacking direction. Fixture fitting portions for an external fixture to clamp the side plates are provided on surfaces of the side plates opposite to the pouch cells.

Optionally, in the battery pack provided by the disclosure, the fixture fitting portions are grooves provided on the surfaces of the side plates opposite to the pouch cells.

Optionally, in the battery pack provided by the disclosure, a plurality of grooves are provided, and the plurality of grooves are arranged on the side plates at equal intervals in a length direction of the side plates.

Optionally, in the battery pack provided by the disclosure, the grooves are opened at ends of the side plates opposite to the lower casing bottom plate.

Optionally, in the battery pack provided by the disclosure, the grooves are perpendicular to the lower casing bottom plate.

Optionally, a planar area of a side surface, adhered to the main body surface of one of the pouch cells, of one of the side plates is greater than a planar area of the main body surface of one of the pouch cells.

Optionally, in the battery pack provided by the disclosure, a side surface, adhered to the main body surface of one of the pouch cells, of one of the side plates is provided with a protruding outer edge limiting portion. The outer edge limiting portion matches a main body shape of one of the pouch cells and defines a relative position of the side plates and the pouch cells.

Optionally, in the battery pack provided by the disclosure, a first reinforcing rib is provided on a surface of the side plates opposite to the pouch cells where the grooves are not provided.

Optionally, in the battery pack provided by the disclosure, a second reinforcing rib is provided at the grooves, a rib height of the second reinforcing rib is lower than that of the first reinforcing rib, and density of the second reinforcing rib is less than that of the first reinforcing rib.

Optionally, in the battery pack provided by the disclosure, the box body further includes long side beams arranged on the lower casing bottom plate corresponding to the side plates. The long side beams are provided with positioning columns. The side plates are provided with positioning grooves matched with the positioning columns along surfaces of a side opposite to the pouch cells.

In another aspect, the disclosure further provides an electric vehicle integrating a battery pack according to any one of the above.

### <Beneficial Effects>

In the technical solutions provided by the disclosure, the pouch CTP battery pack is constructed based on the pouch cells, and the cell stack formed by stacking the pouch cells can be easily assembled and placed in the box.

### BRIEF DESCRIPTION OF THE DRAWINGS

FIG. 1 is a schematic view of distribution of stacks in a pouch cell to pack (CTP) battery pack according to some embodiments of the disclosure.
FIG. 2 is a schematic view of a variation of the distribution of stacks according to the embodiment of FIG. 1.
FIG. 3 is an exploded view of the pouch CTP battery pack applying the distribution of stacks corresponding to FIG. 1.
FIG. 4 is a schematic structural view (top view) of a side plate according to some embodiments of the disclosure.
FIG. 5 is a schematic structural view of an outer surface of the side plate according to the embodiment of FIG. 4.
FIG. 6 is a schematic structural view of the outer surface of the side plate according to some other embodiments of the disclosure.
FIG. 7 is a schematic view of a matching structure between the side plate and a long side beam of a box body in an assembled state according to the embodiment of FIG. 6.
FIG. 8 is an exploded schematic view of the pouch CTP battery pack having limiting portions according to some embodiments.
FIG. 9 is a top view of the box body installed with the limiting portions according to the embodiment of FIG. 8.
FIG. 10 is a schematic view of a relative position relationship between a bottom portion of a pouch cell and the limiting portion when assembly is completed according to the embodiment of FIG. 8.
FIG. 11 is a schematic structural view (exploded view) of a pouch CTP battery pack according to some other embodiments of the disclosure.
FIG. 12 is a schematic view of positions of the limiting portions at a bottom portion of the box body according to the embodiment of FIG. 10.
FIG. 13 is a schematic view (cross-sectional view) of a relative position relationship among the pouch cell, a lower casing bottom plate, and the limiting portion according to another embodiment.
FIG. 14 is a schematic view of filling positions of foaming adhesives according to some embodiments of the disclosure.
FIG. 15 is a schematic view (a partial cross-sectional view along the XY plane) of a filling structure of the foaming adhesive between the pouch cell and a short side beam according to the embodiment of FIG. 14.
FIG. 16 is a schematic view (a partial cross-sectional view along the XZ plane) of a filling height of the foaming adhesive between the pouch cell and the short side beam according to the embodiment of FIG. 14.
FIG. 17 is a schematic structural view (exploded view) of a pouch CTP battery pack provided with adhesive blocking portions according to some embodiments.
FIG. 18 is a schematic structural view after each adhesive blocking portion is compressed according to the embodiment of FIG. 17.
FIG. 19 is a schematic structural view (a top view after an upper cover is removed) of components in the box body according to the embodiment of FIG. 17.
FIG. 20 is a partially enlarged cross-sectional view of a region A in FIG. 19.

### DESCRIPTION OF THE EMBODIMENTS

The technical solutions in the embodiments of the disclosure will be clearly and completely described below with reference to the accompanying drawings in the embodiments of the disclosure. Obviously, the described embodiments are only a part of the embodiments of the disclosure, but not all of the embodiments. Based on the embodiments of the disclosure, all other embodiments obtained by a person having ordinary skill in the art without any creative effort fall within the protection scope of the disclosure.

### <Cell Stack Distribution>

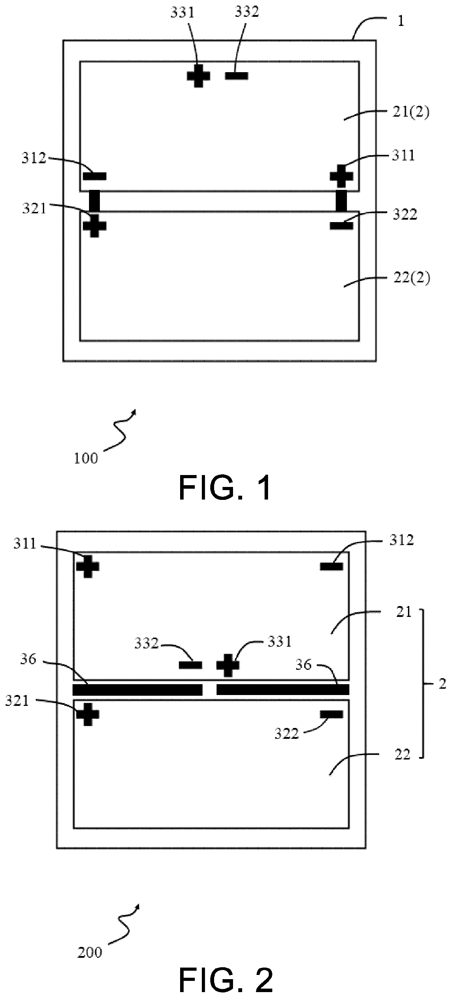

FIG. 1 is a schematic view of distribution of stacks in a pouch cell to pack (CTP) battery pack 100 according to some embodiments of the disclosure.

With reference to FIG. 1, in some embodiments of the disclosure, the pouch CTP battery pack 100 includes a square box body 1 and square cell stacks 2. An internal space of the box body 1 can accommodate two cell stacks 2 placed side by side.

The two cell stacks 2 are a first cell stack 21 and a second cell stack 22. The first cell stack 21 is provided with a first output positive electrode 311 and a first output negative electrode 312 at both ends of a side adjacent to the second cell stack 22. Correspondingly, the second cell stack 22 is provided with a second output positive electrode 321 and a second output negative electrode 322 at both ends of a side adjacent to the first cell stack 21. Herein, positions of the first output positive electrode 311 and the second output negative electrode 322 correspond to each other, and positions of the first output negative electrode 312 and the second output positive electrode 321 correspond to each other. In this way, a wiring length is reduced, which facilitates the series electrical connection between the two cell stacks 2.

In addition, the first cell stack 21 is further provided with a third output positive electrode 331 and a third output negative electrode 332 adjacent to each other at one end away from the second cell stack 22. The first output positive electrode 311, the first output negative electrode 312, the second output positive electrode 321, and the second output negative electrode 322 are used as electrodes electrically connected in series inside the two cell stacks 2. The third output positive electrode 331 and the third output negative electrode 332 are used as output electrodes of the entire pouch CTP battery pack 100. In some embodiments, the third output positive electrode 331 and the third output negative electrode 332 are electrically connected to a battery pack disconnecting unit (BDU), and power is then supplied to the entire vehicle through the battery pack disconnecting unit.

The output electrodes provided by the above distribution and electrical connection manner, i.e., the third output positive electrode 331 and the third output negative electrode 332, are adjacent to each other. In some cases, when the output electrodes of the entire pouch CTP battery pack 100 need to be away from each other, the first cell stack 21 may be placed in the box body 1 in a manner of being rotated 180° relative to FIG. 1. The assembly structure of a pouch CTP battery pack 200 shown in FIG. 2 is thus obtained.

With reference to FIG. 2, by rotating the first cell stack 21 180 degrees and then placing the first cell stack 21 into the body, the third output positive electrode 331 and the third output negative electrode 332 are adjacent to the second cell stack 22. The third output positive electrode 331 is electrically connected to the second output negative electrode 322 via a copper busbar 36, and the third output negative electrode 332 is electrically connected to the second output positive electrode 321 via another copper busbar 36. The high voltage electrical connection between the first cell stack 21 and the second cell stack 22 is thereby achieved. The first output positive electrode 311 and the first output negative electrode 312 may act as output electrodes of the entire pouch CTP battery pack 200. By using the first cell stack 21 and the copper busbars 36 of the abovementioned electrode distribution together, an installation angle of the first cell stack 21 may be flexibly adjusted to meet the needs of different output electrode positions.

The above examples illustrate the distribution and electrical connection of the first cell stack 21 and the second cell stack 22 in some embodiments of the disclosure. It can be understood that the above description is only exemplary and should not be construed as a limitation on the distribution method and electrical connection method. In other embodiments of the disclosure, the first cell stack 21 and the second cell stack 22 may also be integrated into a single-row cell stack 2, and the arrangement positions of the output electrodes of the cell stack 2 may also be flexibly adjusted according to actual needs.

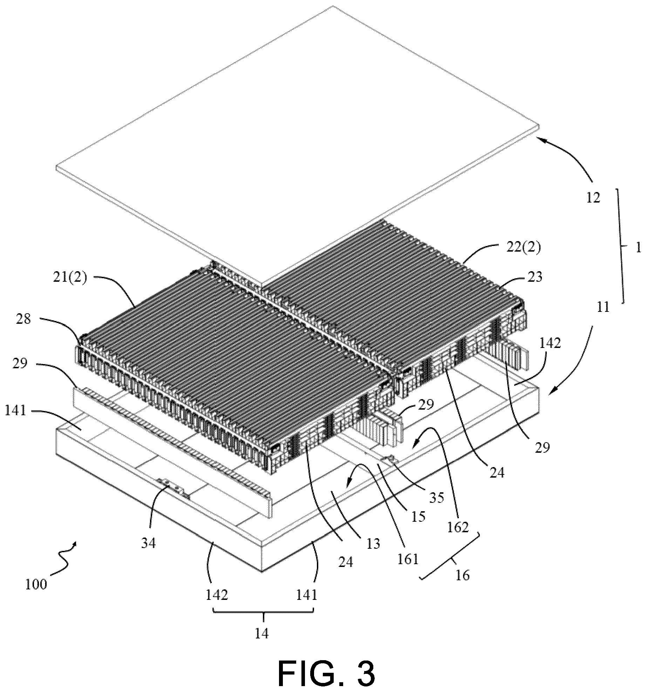

FIG. 3 is an exploded view of the pouch CTP battery pack 100 applying the distribution of stacks corresponding to FIG. 1.

With reference to FIG. 3, the square box body 1 includes a lower casing 11 and an upper cover 12. The lower casing 11 includes a rectangular lower casing bottom plate 13 and four side beams 14, and the four side beams 14 are vertically fixed to four sides of the rectangular lower casing bottom plate 13. The four side beams 14, the lower casing bottom plate 13, and the upper cover 12 are enclosed together to define a chamber 16 for accommodating the cell stacks 2. In addition to the four side beams 14, the box body 1 further includes a box body middle beam 15 arranged at a center of the box body 1 in a length direction. The box body middle beam 15 divides the chamber 16 into a first chamber 161 and a second chamber 162. The first chamber 161 is used to accommodate the first cell stack 21, and the second chamber 162 is used to accommodate the second cell stack 22.

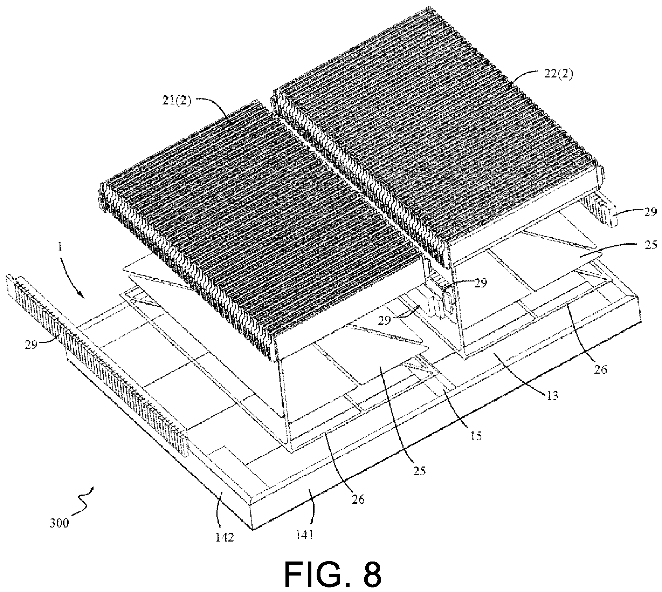

Bottom portions of the cell stacks 2 are directly bonded and fixed to the lower casing bottom plate 13 by means of a structural adhesive or a thermally conductive structural adhesive 25 (not shown in FIG. 3, refer to FIG. 8). In order to stabilize the cell stacks 2, enhance the overall strength and rigidity of the battery pack, and achieve protection against thermal runaway, foaming adhesives 29 are further filled between the cell stacks 2 and the side beams 14 or the box body middle beam 15.

A structural adhesive, a thermally conductive structural adhesive, or an elastomer component (not shown in the figure) is provided on top portions of the cell stacks 2 to fill gaps between the cell stacks 2 and the upper cover 12. By using the structural adhesive, the thermally conductive structural adhesive 25, and the foaming adhesives 29 between the bottom portions of the cell stacks 2 and the lower casing bottom plate 13 as well as the structural adhesive, the thermally conductive structural adhesive, or the elastomer component on the top portions of the cell stacks 2, a stable and buffering support may be formed for the cell stacks 2 from all directions around them. In some embodiments, the elastomer component may be composited with fireproof materials such as foam and mica, and a double-sided adhesive or a hot-melt adhesive is provided between the elastomer component and the cell stacks 2.

In some embodiments, liquid cooling flow paths (not shown) may be provided in the lower casing bottom plate 13 and the upper cover 12. The heat dissipated by the cell stacks 2 may be quickly transferred to the liquid cooling flow paths by using the thermally conductive structural adhesive 25, and the cooling capacity of the cell stacks 2 is thus improved.

The four side beams 14 include two long side beams 141 and two short side beams 142. An end output electrode base 34 is arranged inside a middle portion of each short side beam 142 adjacent to the cell stack 21. A copper busbar (not shown) connected to the third output positive electrode 331 and a copper busbar (not shown) connected to the third output negative electrode 332 are both arranged on the end output electrode bases 34.

A middle adapter base 35 is provided on the box body middle beam 15. The copper busbar connected to the first output positive electrode 311 and the copper busbar connected to the second output negative electrode 322 are both arranged on the middle adapter base 35, and one end of each of the two copper busbars is also arranged on the middle adapter base 35 and is electrically connected to the corresponding copper busbar. The electrical connection between the first cell stack 21 and the second cell stack 22 is thus achieved.

### <Cell Stack>

With reference to FIG. 3 again, in this embodiment, each cell stack 2 is formed by stacking and bonding a plurality of pouch cells 23, and a stacking direction is a thickness direction of the pouch cells 23, that is, a width direction of the box body 1. A length direction of the pouch cells 23 is parallel to a length direction of the box body 1. A top portion and a bottom portion of each pouch cell 23 are fully insulated and protected by insulating tape (not shown in the figure).

The pouch cells 23 are, for example, cells that use plastic or flexible materials such as aluminum-plastic films as packaging materials, and have the advantages of being light in weight, not prone to explosion, and flexible in design. The aluminum-plastic film may be, for example, an aluminum-plastic film including a nylon layer, an aluminum layer, and a PP/CPP layer.

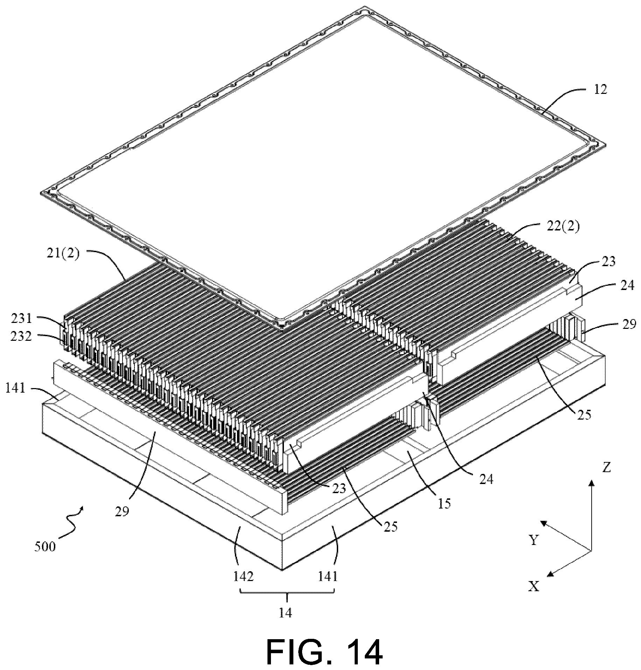

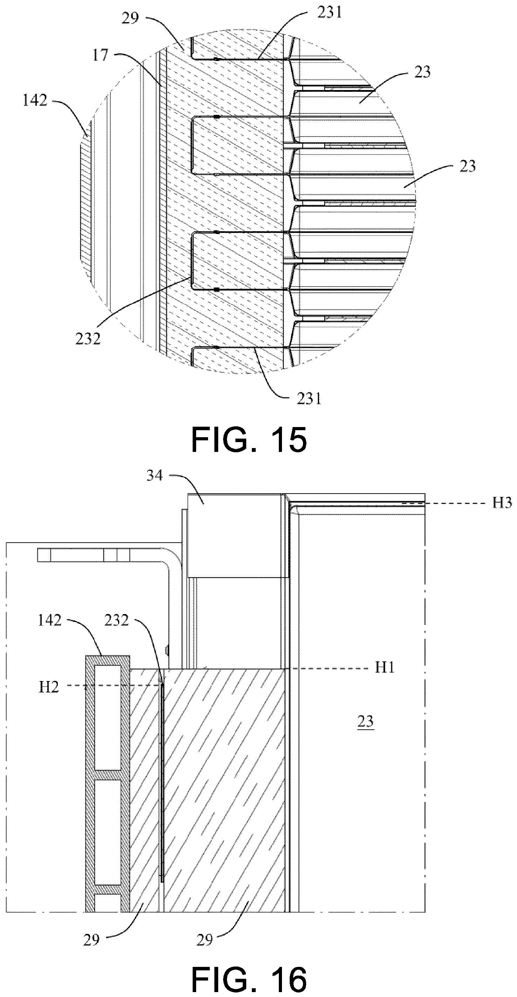

In some embodiments of the disclosure, size ranges of each pouch cell 23 used in the pouch CTP battery pack are: length 300 mm to 700 mm, width 100 mm to 120 mm, and thickness 10 mm to 20 mm. A tab 231 (with reference to FIG. 14 and FIG. 15) has a thickness of 0.2 mm to 0.6 mm and a width of 40 mm to 80 mm.

### <Side Plate>

How to install the cell stacks 2 into the box and apply a pre-tightening force to the cell stacks 2 in an initial state is a technical problem to be solved in an assembly process of the pouch CTP battery pack 100.

To solve the above problem, with reference to FIG. 3 again, in some embodiments of the disclosure, each cell stack 2 of the pouch CTP battery pack 100 has two side plates 24 facing each other. The two side plates 24 are arranged on inner sides of the long side beams 141 at both ends of the box body 1 in the width direction (i.e., at both ends of the cell stacks 2 in the stacking direction) and are bonded and fixed to main body surfaces of the two pouch cells 23 at both ends of the cell stacks 2 in the stacking direction.

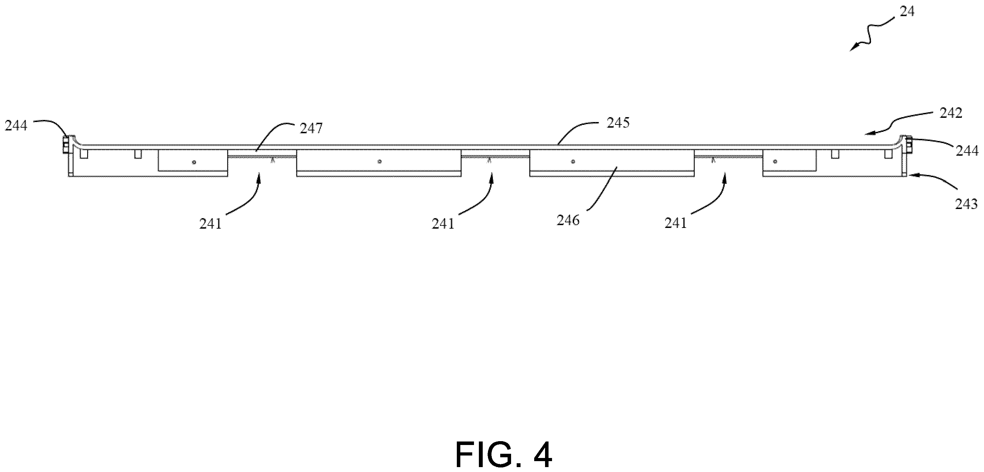

FIG. 4 is a schematic structural view (top view) of the side plate 24 according to some embodiments of the disclosure. With reference to FIG. 4, an outer surface 243 of the side plate 24 has grooves 241 matched with an external tooling fixture. The external tooling fixture (not shown) may enter the grooves 241, clamp the side plate 24 through the grooves 241, and apply a pre-tightening force inward to the cell stack 2 from both ends of the cell stack 2 in the stacking direction, so that the cell stack 2 is squeezed to a size that can be easily inserted into the box body 1. Application of the pre-tightening force may enhance the cycling performance of the cells. In addition, the grooves 241 may also facilitate the exit of the tooling fixture after the cell stack 2 is placed in the box.

As shown in FIG. 4, there are three grooves 241, and the three grooves 241 are arranged at equal intervals in a length direction of the side plate 24. Although there are three grooves 241 shown in FIG. 4, a person having ordinary skill in the art should know that the number of grooves 241 is not limited to three. The arrangement of plural grooves 241 allows the pre-tightening force applied to the cell stacks 2 to be applied evenly. The number of grooves 241 may be appropriately adjusted according to a length of the side plates 24 and a width of the grooves 241.

In addition, as shown in FIG. 1 and FIG. 3 to FIG. 5, each groove 241 is opened at an end of the side plate 24 opposite to the lower casing bottom plate 13, and each groove 241 is perpendicular to the lower casing bottom plate 13. The groove 241 is opened at the end of the side plate 24 opposite to the lower casing bottom plate 13, so that the tooling fixture that enters the groove 241 can be smoothly exited after the cell stack 2 is placed into the box. Further, each groove 241 is perpendicular to the lower casing bottom plate 13, so that the tooling fixture that enters the groove 241 can exit in the vertical direction, and the efficiency and convenience of the assembly process are thereby improved.

In order to ensure that the pre-tightening force is more evenly distributed to each position of the pouch cell 23 and avoid local stress concentration, a center portion of an inner surface 242 of each side plate 24 that contacts the main body surface of the pouch cell 23 is formed as a flat surface 245. In other words, the inner surface 242 of the side plate 24 is configured such that an area of the flat surface 245 is greater than an area of a plane portion of the main body surface of the pouch cell 23.

An outer edge of the inner surface 242 of the side plate 24 protrudes to form an outer edge limiting portion 244 for limiting a relative position relationship between the side plate 24 and the pouch cell 23 when the flat surface 245 in the center of the inner surface 242 abuts against the main body surface of the pouch cell 23.

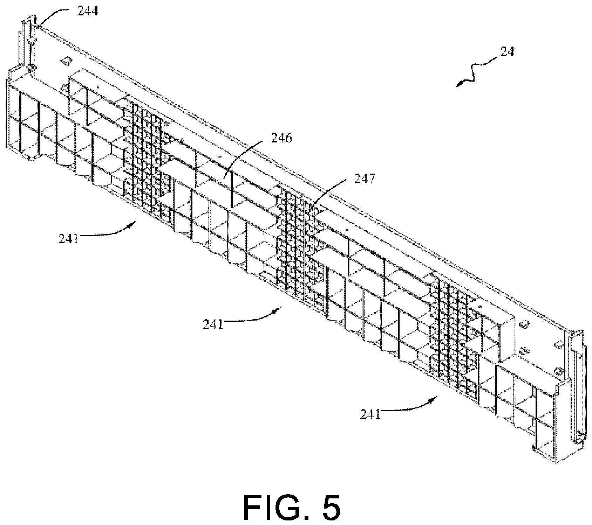

A structure of the outer surface 243 of the side plate 24 is shown in FIG. 5. With reference to FIG. 5, second reinforcing ribs 247 are arranged at the grooves 241 provided on the outer surface 243 of the side plate 24, and first reinforcing ribs 246 are arranged at positions where the grooves 241 are not provided. The number of the second reinforcing ribs 247 is greater than that of the first reinforcing ribs 246, and the density is also greater than that of the first reinforcing ribs 246, so as to improve the strength of the portion that matched with the tooling fixture. The second reinforcing ribs 247 are lower in height than the first reinforcing ribs 246, the grooves 241 are thereby formed.

Optionally, a wall thickness of the side plate 24 is 1.5 mm to 5 mm, an overall width is 5 mm to 25 mm, and a material of the side plate 24 may be plastic materials such as PA6, PA66, PPE, PBT, etc.

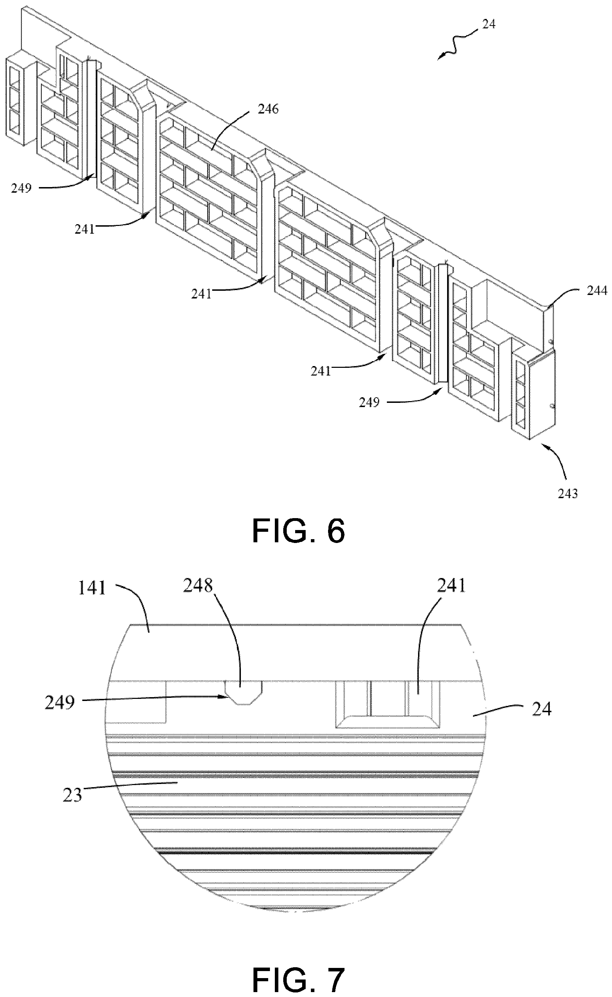

FIG. 6 is a schematic structural view of the outer surface 243 of the side plate 24 according to some other embodiments of the disclosure. FIG. 7 is a schematic view of a matching structure between the side plate 24 and the long side beam 141 of the box body 1 in an assembled state. With reference to FIG. 6 and FIG. 7, an inner wall of the long side beam 141 of the box body 1 is provided with a positioning column 248, and the outer surface 243 of the side plate 24 is provided with a positioning groove 249. Shapes and sizes of the positioning column 248 and the positioning groove 249 match each other, and the positioning column 248 may be inserted into the positioning groove 249 in a matching manner. The relative movement between the side plate 24 and the long side beam 141 in the length direction of the pouch cell 23 is restricted, so that the cell stack 2 may be positioned and installed conveniently and accurately during assembly.

It should be noted that the groove 241 is only a form of matching with the external tooling fixture in this embodiment. In other embodiments of the disclosure, depending on the type of the tooling fixture, the outer surface 243 of the side plate may also be provided with a fixture matching portion in any other suitable form, as long as the fixture matching portion may be used together with a tooling fixture so that the tooling fixture may stably clamp the cell stack 2.

By means of the side plate 24 of the above structure, a uniform pre-tightening force may be applied to the cell stack 2 in the initial state. In this way, the grouping capability of the pouch cells 23 is effectively improved, and the pouch cells 23 and the cell stacks 2 may thus be easily grouped and boxed.

### <Thermally Conductive Structural Adhesive 25 - Limiting Portion 26>

During the assembly process, it is necessary to apply the thermally conductive structural adhesive 25 between the bottom portion of the cell stack 2 and the lower casing bottom plate 13, and the thermally conductive structural adhesive 25 is generally spread evenly by external extrusion to fill the gap. However, due to factors such as an uneven extrusion pressure, the thermally conductive structural adhesive 25 in some regions is usually excessively thin or excessively thick, which affects the heat dissipation efficiency and may affect the insulation performance.

FIG. 8 is an exploded schematic view of a pouch CTP battery pack 300 having limiting portions 26 according to some embodiments. With reference to FIG. 8, in order to solve the above problems, in some embodiments of the disclosure, the limiting portions 26 of a specified height are provided in a manner of being attached to the lower casing bottom plate 13. When the box body 1 is placed horizontally, a top height of each limiting portion 26 is equal to or slightly lower than a height reached when a reasonable amount of the thermally conductive structural adhesive 25 is leveled. In this way, the staff or an automated adhesive coating system may determine whether the adhesive coating amount is appropriate based on the relative height relationship between a liquid level of the thermally conductive structural adhesive 25 and a top portion of the limiting portion 26 when the thermally conductive structural adhesive 25 is leveled. That is, when the added thermally conductive structural adhesive 25 is leveled and the liquid level is basically flush with the top portion of the limiting portion 26 or the liquid level is slightly higher than the top portion of the limiting portion 26, the amount of the added thermally conductive structural adhesive 25 is appropriate, otherwise the amount of the added thermally conductive structural adhesive 25 needs to be adjusted. By using the limiting portion 26, the thickness of the thermally conductive structural adhesive 25 between the cell stack 2 and the box body 1 may be more accurately controlled to a certain specified thickness value within the range of 0.5 mm to 5 mm.

In some embodiments of the disclosure, the limiting portion 26 is in a strip shape, that is, a limiting strip. The limiting portion 26 is preferably made of an insulating material, for example, an elastomer such as foam and silicone rubber, or plastic such as PP, PPF, etc. In some other embodiments, the limiting portion 26 may also be made of a metal material with relatively high strength, such as aluminum alloy or stainless steel, and insulation may be achieved by sticking an insulating film or spraying an insulating material on a surface of the metal limiting portion 26.

In some embodiments, the limiting portion 26 may be formed by splicing a plurality of limiting strips or may be formed by integrally molding the plurality of limiting strips. In some other embodiments, the limiting portion 26 may also be integrally formed with the lower casing bottom plate 13.

On the one hand, the limiting portion 26 may assist in controlling the amount of thermally conductive structural adhesive 25 added, improve the uniformity of the thermally conductive structural adhesive 25 at the bottom portion of the cell stack 2, enhance the heat dissipation capacity of the cell stack 2, and improve safety under high current use conditions. On the other hand, the limiting portion 26 may also separate the cell stack 2 and the lower casing bottom plate 13 to ensure that the bottom portion of the cell stack 2 does not directly contact the lower casing bottom plate 13 to affect the insulation.

With reference to FIG. 8, in some embodiments, each limiting portion 26 may be an independent component. After the limiting portions 26 are fixed to the lower casing bottom plate 13, the thermally conductive structural adhesive 25 having the same height as the limiting portions 26 (or slightly higher than the height of the limiting portions 26) is applied in the region between the limiting portions 26, and then the cell stack 2 is placed in the box body 1. The thermally conductive structural adhesive 25 is squeezed through the cell stack 2, so that all the pouch cells 23 are in uniform contact with the limiting portions 26 and the thermally conductive structural adhesive 25. In this embodiment, the limiting portions 26 are formed by combining a plurality of foams or silicone rubbers. The surface of the lower casing bottom plate 13 is flat, and the limiting portion 26 is adhered to the surface of the lower casing bottom plate 13.

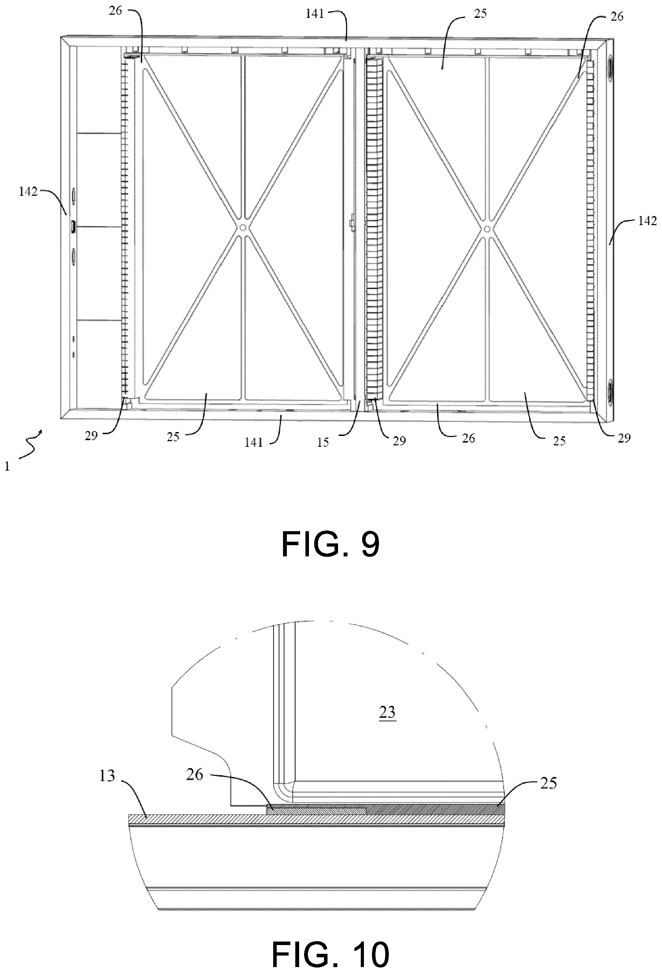

FIG. 9 is a top view of the box body 1 installed with the limiting portions 26. With reference to FIG. 9, in the embodiment of FIG. 8, the limiting portions 26 are independently manufactured frame structures, including rectangular limiting portions 26 constituting an outer frame, limiting portions 26 connecting the diagonal lines of the rectangle, and limiting portions 26 parallel to the short side beams 142.

The heights of the various limiting portions 26 are equal and are substantially equal to the rated adhesive coating height. FIG. 10 is a schematic view of a relative position relationship between a bottom portion of the pouch cell 23 and the limiting portion 26 when assembly is completed. With reference to FIG. 9 and FIG. 10, the limiting portion 26 extends in the width direction of the box body 1, and the extension range covers the extension range of the cell stack 2 in the width direction of the box body 1. Therefore, the limiting portion 26 arranged in this way may effectively ensure that each of the pouch cells 23 of the cell stack 2 may be pressed against the limiting portion 26.

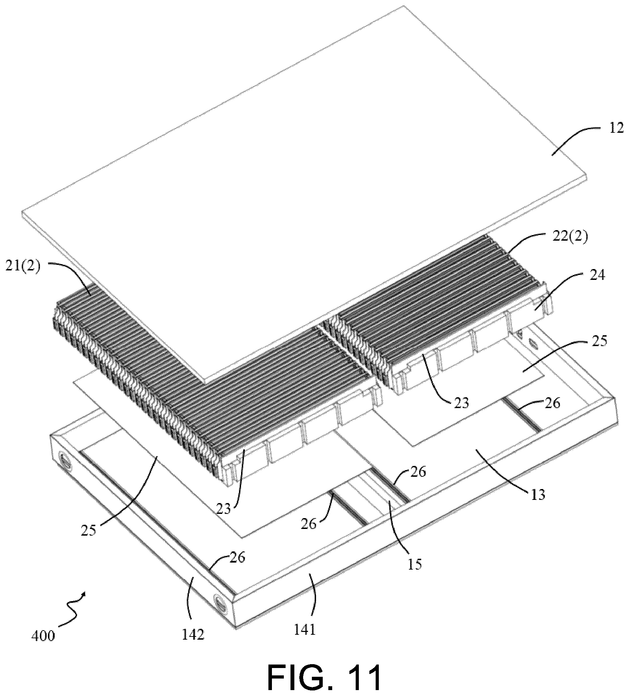

FIG. 11 is a schematic structural view (exploded view) of a pouch CTP battery pack 400 according to some other embodiments of the disclosure. With reference to FIG. 11, the limiting portions 26 may be integrally formed with the lower casing bottom plate 13. To be specific, the limiting portions 26 may be made on the surface of the lower casing bottom plate 13 by punching ribs, or an adhesive coating groove may be punched out and formed on the surface of the lower casing bottom plate 13 by punching holes. A side wall of the adhesive coating groove is higher than a bottom portion of the adhesive coating groove, that is, the side wall of the adhesive coating groove is equivalent to the limiting portion 26.

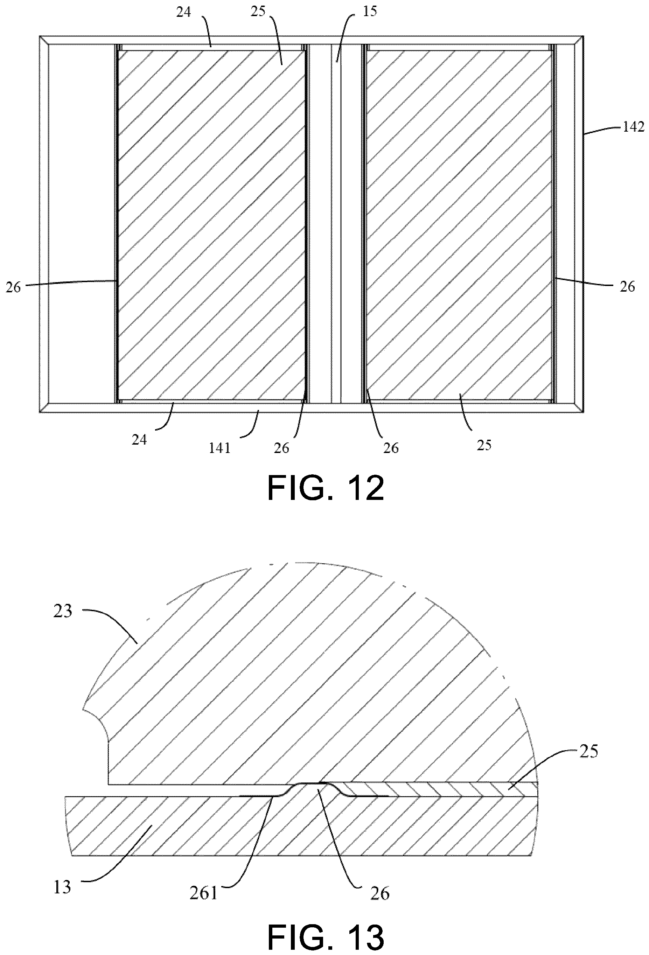

FIG. 12 is a schematic view of positions of the limiting portions 26 at a bottom portion of the box body 1 according to the embodiment of FIG. 10. FIG. 13 is a schematic view (cross-sectional view) of a relative position relationship among the pouch cell 23, the lower casing bottom plate 13, and the limiting portion 26 according to the embodiment of FIG. 10. With reference to FIG. 12 and FIG. 13, the limiting portion 26 is a limiting portion 26 extending in the width direction of the box body 1. The limiting portion 26 is integrally formed with the box body 1 and is made of the same metal material. In order to insulate the limiting portion 26, an insulating coating layer may be sprayed on the surface of the limiting portion 26, or the surface of the limiting portion 26 may be covered with an insulating film 261. By manufacturing the limiting portion 26 in an integrated manner, the step of separately positioning and installing the limiting portion 26 may be omitted, thereby shortening the process flow and improving production efficiency.

### <Foaming Adhesive>

In order to improve the overall strength and rigidity of a pouch CTP battery pack 500 and ensure the structural safety performance of the pouch CTP battery pack 500, in some embodiments of the disclosure, the foaming adhesives 29 are also filled between the short side beams 142 and the cell stacks 2.

FIG. 14 is a schematic view of filling positions of the foaming adhesives 29 in the pouch CTP battery pack 500 according to some embodiments of the disclosure. With reference to FIG. 14, the foaming adhesives 29 are filled at both ends of the pouch cells 23 in the length direction, specifically between the short side beams 142 and the cell stacks 2, and between the box body middle beam 15 and the cell stacks 2.

The pouched cells 23 are stacked in a vertical position in the thickness direction thereof, and the length direction of the pouched cells 23 is the length direction of the box body 1. The tabs 231 extend from both ends of each pouch cell 23 in the length direction, and positive electrode tabs 231 and negative electrode tabs 231 are located at both ends of the pouch cells 23 in the length direction. The positive electrode tabs 231 and negative electrode tabs 231 of adjacent cells are rolled and bent and are directly overlapped and welded to be fixed. In addition, in some embodiments, the cell stack 2 may further include a flexible circuit board 28 (with reference to FIG. 3). A body of the flexible circuit board 28 is arranged in parallel with the tabs 231, and a sampling piece (not shown) of the flexible circuit board 28 is welded to the tabs 231.

FIG. 15 is a schematic view (a partial cross-sectional view along the XY plane in FIG. 14) of a filling structure of the foaming adhesive 29 between the pouch cell 23 and the short side beam 142. FIG. 16 is a schematic view (a partial cross-sectional view along the XZ plane in FIG. 14) of a filling height of the foaming adhesive 29 between the pouch cell 23 and the short side beam 142. With reference to FIG. 15 and FIG. 16, the adjacent tabs 231 are directly overlap-welded. After the tabs 231 are welded, the foaming adhesives 29 are poured among the pouch cell 23, the short side beam 142, and the box body middle beam 15. After foaming and curing, a gap between the cell stack 2 and the short side beam 142 and a gap between the cell stack 2 and the box body middle beam 15 are filled with the foaming adhesives 29.

After curing and molding, the height of the foaming adhesives 29 is higher than the height of the tabs 231. In this way, the foaming adhesives 29 may completely wrap the tabs 231 inside the foaming adhesives 29, and the tabs 231 are electrically isolated from each other by the foaming adhesives 29. The overlapping short circuit between the tabs 231 is thus effectively prevented, and the thermal runaway protection performance may be improved, and the safety and stability may be improved.

In addition to completely immersing the tabs 231, a foaming adhesive height H1 is preferably less than or equal to a pouch cell height H3. That is, preferably, a tab height H2 ≤ the foaming adhesive height H1 ≤ the pouch cell height H3. Since the foaming adhesives 29 may completely immerse the tabs 231, when thermal runaway occurs, the high-temperature gas generated inside the pouch cell 23 may no longer be released from the tabs 231, but may instead be released from the top of the tabs 231 of the pouch cell 23 above the foaming adhesives 29. The spread of thermal runaway is thereby effectively prevented.

In some embodiments of the disclosure, a distance between a tab overlap surface 232 connecting the tabs 231 to each other and the short side beam 142 or the box body middle beam 15 is 3 mm to 10 mm. Inner surfaces of the short side beam 142 and the box body middle beam 15 are provided with insulating sheets 17, and a thickness of the insulating sheets 17 is 0.1 mm to 0.5 mm. The insulating sheet 17 may further ensure the electrical insulation between the tabs 231 and the box body 1.

The density of each foaming adhesive 29 after curing is 0.1 g/cm³ to 0.3 g/ cm³, the elastic modulus is 10 MPa to 30MPa, the bonding performance, shear strength, and tensile strength range from 1 MPa to 3MPa, the elongation at break is ≥8%, the compression modulus is ≥30MPa, and the storage modulus is ≥20MPa. In addition, the material of the foaming adhesive 29 also has insulation properties, with a volume resistivity ≥1×10¹⁵Ω·cm, and a flame retardant grade that meets UL94 V0.

In the above manner, on the one hand, the foaming adhesive 29 may fix the cell stack 2 and increase the rigidity and strength of the pouch CTP battery pack 500. On the other hand, the foaming adhesive 29 may isolate the tabs 231, including isolating the tabs 231 from high-temperature gas generated during thermal runaway, and achieve electrical insulation between the tabs 231 and between the tabs 231 and the box body 1.

### <Adhesive Blocking Portion>

In order to prevent the foaming adhesive 29 from invading between the cell stack 2 and the thermally conductive structural adhesive 25 and affecting the heat dissipation capacity of the cell stack 2 or reducing the mechanical properties of the battery pack, in some embodiments of the disclosure, an adhesive blocking portion 27 is provided at a position where the foaming adhesive 29 and the thermally conductive structural adhesive 25 may come into contact.

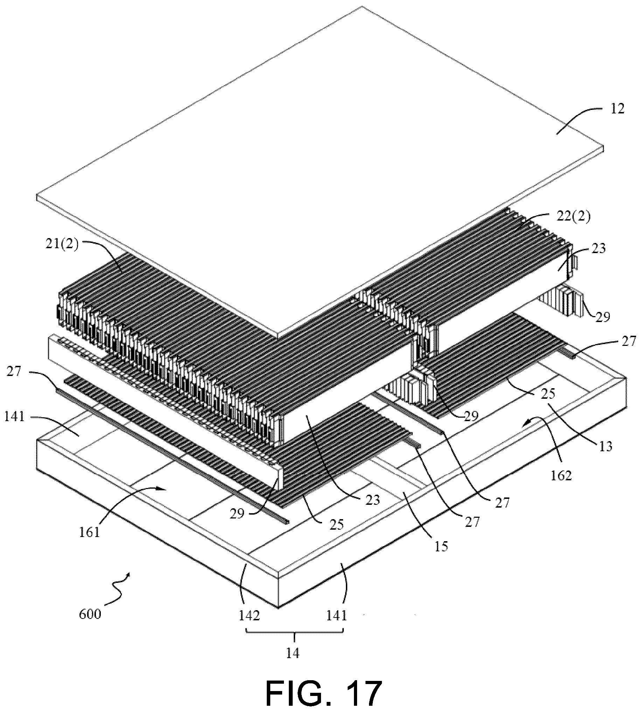

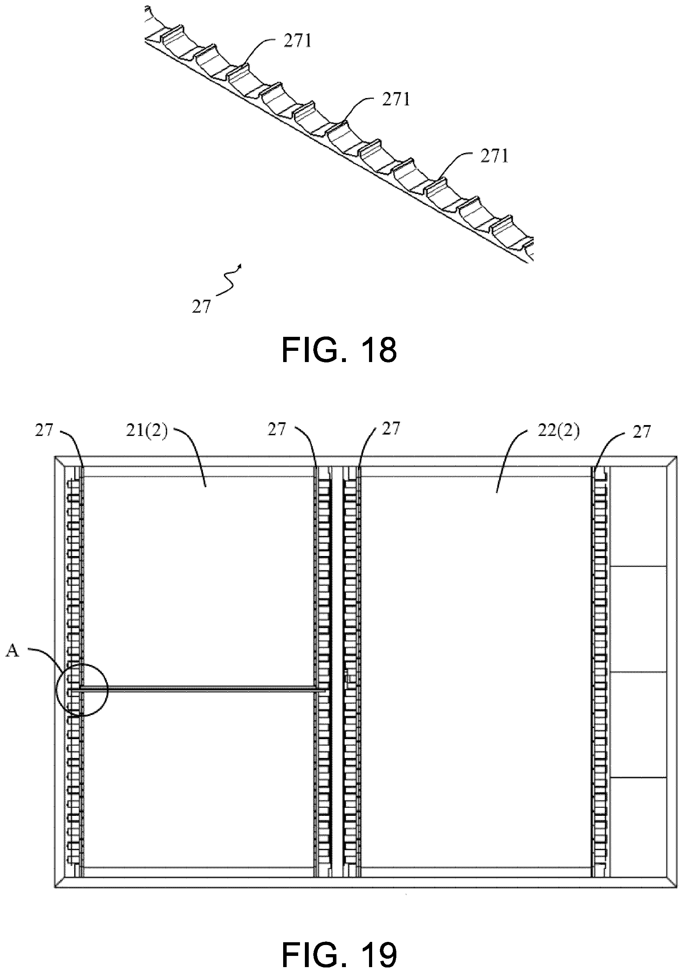

FIG. 17 is a schematic structural view (exploded view) of a pouch CTP battery pack 600 provided with adhesive blocking portions 27 according to some embodiments. FIG. 18 is a schematic structural view after each adhesive blocking portion 27 is compressed.

With reference to FIG. 17 and FIG. 18, an extending direction of the adhesive blocking portions 27 is perpendicular to the length direction of the pouch cells 23, and both ends of the adhesive blocking portions 27 in the length direction extend to abut against the inner side of the long side beam 141.

Two adhesive blocking portions 27 are respectively disposed inside the first chamber 161 and the second chamber 162, and the region for applying the thermally conductive structural adhesive 25 is located between the two adhesive blocking portions 27. The foaming adhesives 29 are filled between the adhesive blocking portions 27 and the short side beams 142 and between the adhesive blocking portions 27 and the box body middle beam 15.

A length of each adhesive blocking portion 27 is greater than or equal to the length of each cell stack 2 in the stacking direction and less than the width of the box body 1. A width of each adhesive blocking portion 27 is 1 mm to 30 mm. A top portion of each adhesive blocking portion 27 is higher than the top portion of the thermally conductive structural adhesive 25 to limit the adhesive coating region of the thermally conductive structural adhesive 25 and prevent the thermally conductive structural adhesive 25 from overflowing.

Each adhesive blocking portion 27 is preferably made of an insulating material with a certain elasticity, such as elastic materials such as foam, silicone rubber, etc., so as to effectively fill the gap, isolate the foaming adhesive 29 and the thermally conductive structural adhesive 25, and prevent the two adhesives from contacting each other.

A bottom portion of the adhesive blocking portion 27 is a plane, which fits with the lower casing bottom plate 13. A top portion may be formed as a flat surface having elasticity. There is a certain gap between the pouched cells 23. When the pouched cells 23 press the top planes of the elastic adhesive blocking portions 27, a plurality of teeth 271 arranged at equal intervals in the length direction may be formed on the top portions of the adhesive blocking portions 27. A tooth spacing between adjacent teeth 271 is equal to the thickness of one or a group of pouch cells 23. Each tooth 271 extends into the space between adjacent pouch cells 23, so that the adhesive blocking portions 27 may be bonded and fixed to the cell stacks 2.

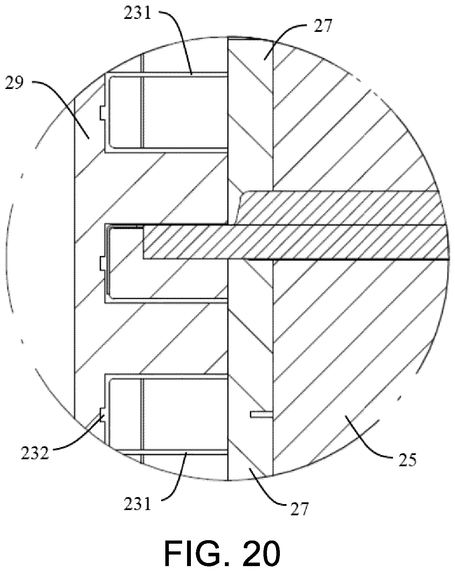

FIG. 19 is a schematic structural view (a top view) of components in the box body 1 according to the embodiment of FIG. 17. FIG. 20 is a partially enlarged cross-sectional view of a region A in FIG. 19.

With reference to FIG. 17, FIG. 19, and FIG. 20, after the cell stack 2 is installed in place, the pouch cell 23 and the adhesive blocking portion 27 are fully pressed together, and there is substantially no gap between the bottom portion of the pouch cell 23 and the adhesive blocking portion 27. The foaming adhesive 29 and the thermally conductive structural adhesive 25 are thus effectively isolated to avoid contact between the two.

In the above manner, the adhesive blocking portion 27 may form a close contact with the bottom portion of the cell stack 2 and fill the gaps between the pouch cells 23, so that the foaming adhesive 29 and the thermally conductive structural adhesive 25 are effectively isolated. The foaming adhesive 29 is prevented from invading between the thermally conductive structural adhesive 25 and the cell stack 2, so that the heat dissipation performance of the cell stack 2 and the mechanical performance of the pouch CTP battery pack 600 are ensured.

In other embodiments of the disclosure, the adhesive blocking methods of the adhesive blocking portion 27 include but not limited to filling the gaps between adjacent pouch cells 23, filling the gaps between the box body 1 and the cell stack 2, and wrapping the side surfaces of the pouch cells 23, etc., as long as the thermally conductive structural adhesive 25 is isolated from the foaming adhesive 29.

### <Assembly Process>

In the following paragraphs, the assembly process of the pouch CTP battery pack provided in some embodiments of the disclosure is introduced.

First, the lower casing 11 of the box body 1 is provided. If the lower casing 11 is integrated with the limiting portions 26 or the adhesive blocking portions 27, the thermally conductive structural adhesive 25 is directly applied between the limiting portions 26 of the lower casing 11. If the lower casing 11 is not integrated with the limiting portions 26, additional limiting portions 26 or adhesive blocking portions 27 are provided, and the thermally conductive structural adhesive 25 is applied in the region between the additional limiting portions 26 or the adhesive blocking portions 27.

After a reasonable amount of thermally conductive structural adhesive 25 is applied, an external tooling fixture is connected to the groove 241 of the side plate 24, and the two cell stacks 2 are placed in the box. Before entering the box, the cell stacks 2 are compressed to a certain size by the clamping action of the tooling fixture, so that the overall width of the cell stacks 2 including the side plates 24 is less than or equal to the width of the internal chamber 16 of the box body 1. After the cell stacks 2 are placed in the box, the tooling fixture may exit through the grooves 241 of the side plates 24. The cell stacks 2 slowly rebound until the first reinforcing ribs 246 of the side plates 24 contact the long side beams 141 and then stop rebounding.

After the installation of some electrical connectors is completed, the foaming adhesives 29 are poured between the short side beams 142 and the cell stacks 2 and between the box body middle beam 15 and the cell stacks 2. After the foaming adhesives 29 are cured and other electrical connectors and the battery management system (if any) are installed, the structural adhesive is coated on the cell stacks 2, and the upper cover 12 is closed to complete the assembly of the pouch CTP battery pack.

The above multiple embodiments provided by the disclosure may be combined with each other. In some embodiments, the pouch CTP battery pack can also be directly integrated into the chassis of the electric vehicle, which is not limited in the embodiments of the disclosure.

## Claims

1. A battery pack (100, 200, 300, 400, 500, 600), comprising:
a box body (1) comprising a lower casing bottom plate (13);
a cell stack (2) formed by stacking a plurality of pouch cells (23) and arranged in the box body (1);
a thermally conductive structural adhesive (25) arranged between the cell stack (2) and the lower casing bottom plate (13) and bonded and fixed to the cell stack (2) and the lower casing bottom plate (13); and
side plates (24) arranged at both ends of the cell stack (2) in a stacking direction and adhered to main body surfaces of two of the pouch cells (23) at both ends of the cell stack (2) in the stacking direction,
wherein fixture fitting portions for an external fixture to clamp the side plates (24) are provided on surfaces of the side plates (24) opposite to the pouch cells (23).

2. The battery pack (100, 200, 300, 400, 500, 600) according to claim 1, wherein the fixture fitting portions are grooves (241) provided on the surfaces of the side plates (24) opposite to the pouch cells (23).

3. The battery pack (100, 200, 300, 400, 500, 600) according to claim 2, wherein a plurality of the grooves (241) are provided, and the plurality of the grooves (241) are arranged on the side plates (24) at equal intervals in a length direction of the side plates (24).

4. The battery pack (100, 200, 300, 400, 500, 600) according to claim 2, wherein the grooves (241) are opened at ends of the side plates (24) opposite to the lower casing bottom plate (13).

5. The battery pack (100, 200, 300, 400, 500, 600) according to claim 4, wherein the grooves (241) are perpendicular to the lower casing bottom plate (13).

6. The battery pack (100, 200, 300, 400, 500, 600) according to claim 2, wherein a planar area of a side surface, adhered to the main body surface of one of the pouch cells (23), of one of the side plates (24) is greater than a planar area of the main body surface of one of the pouch cells (23).

7. The battery pack (100, 200, 300, 400, 500, 600) according to claim 2, wherein a side surface, adhered to the main body surface of one of the pouch cells (23), of one of the side plates (24) is provided with a protruding outer edge limiting portion (244), and
the outer edge limiting portion (244) matches a main body shape of one of the pouch cells (23) and defines a relative position of the side plates (24) and the pouch cells (23).

8. The battery pack (100, 200, 300, 400, 500, 600) according to claim 2, wherein a first reinforcing rib (246) is provided on a surface of the side plates (24) opposite to the pouch cells (23) where the grooves (241) are not provided.

9. The battery pack (100, 200, 300, 400, 500, 600) according to claim 8, wherein a second reinforcing rib (247) is provided at the grooves (241), a rib height of the second reinforcing rib (247) is lower than that of the first reinforcing rib (246), and density of the second reinforcing rib (247) is less than that of the first reinforcing rib (246).

10. The battery pack (100, 200, 300, 400, 500, 600) according to claim 2, wherein the box body (1) further comprises long side beams (141) arranged on the lower casing bottom plate (13) corresponding to the side plates (24),
the long side beams (141) are provided with positioning columns (248), and
the side plates (24) are provided with positioning grooves (249) matched with the positioning columns (248) along surfaces of a side opposite to the pouch cells (23).

11. An electric vehicle integrating a battery pack (100, 200, 300, 400, 500, 600) according to any one of claims 1 to 10.
